(19) **Europäisches Patentamt European Patent Office Office européen des brevets**

(11) **EP 1 283 646 B1**

(12) **FASCICULE DE BREVET EUROPEEN**

(45) Date de publication et mention
de la délivrance du brevet:
**11.11.2009   Bulletin 2009/46**

(51) Int Cl.:
*H04W 16/18* (2009.01)

(21) Numéro de dépôt: **02291978.1**

(22) Date de dépôt: **06.08.2002**

(54) **Système et procédé de planification de réseau de télécommunications**

System und Verfahren zur Planung eines Telekommunikationsnetzwerks

System and method for planning a telecommunications network

(84) Etats contractants désignés:
**AT BE BG CH CY CZ DE DK EE ES FI FR GB GR
IE IT LI LU MC NL PT SE SK TR**

(30) Priorité: **10.08.2001   FR 0110720**

(43) Date de publication de la demande:
**12.02.2003   Bulletin 2003/07**

(73) Titulaire: **Société Française du Radiotéléphone-
SFR
75008 Paris (FR)**

(72) Inventeur: **Fattouch, Imad
75013 Paris (FR)**

(74) Mandataire: **Debay, Yves
Cabinet Debay
126 Elysée 2
78170 La Celle Saint Cloud (FR)**

(56) Documents cités:
**EP-A- 0 847 213        WO-A-94/03986
WO-A-99/26439        US-A- 5 768 687
US-A- 6 111 857**

**Description**

La présente invention concerne un procédé et dispositif de création de matrices de contraintes en vue de leur utilisation dans la planification des fréquences porteuses à attribuer aux stations de base prévues pour gérer les cellules d'un réseau de radiotéléphonie cellulaire en cours de définition.

Un réseau radiocellulaire, par exemple le réseau GSM, est constitué d'une pluralité de stations de base radio terrestres qui sont interconnectées à travers le réseau téléphonique filaire et auxquelles les terminaux mobiles peuvent accéder lorsqu'ils se trouvent dans la cellule radio d'une station. Une liaison dite montante, c'est-à-dire du terminal vers le réseau, s'effectue dans une première bande de fréquence, tandis que la liaison descendante du réseau vers le terminal s'effectue dans une deuxième bande de fréquence. Chaque bande de fréquence est partagée en plusieurs canaux, par exemple 62, chacun de largeur déterminée, par exemple 200 kHz. Un espacement spectral déterminé appelé "écart duplex" sépare la bande de fréquence de la liaison montante de celle de la liaison descendante.

Chaque station de base doit avoir une portée suffisante pour que la cellule considérée déborde sur les voisines, afin d'éviter tout risque de coupure de communication lorsqu'un terminal mobile change de cellule. Cela nécessite d'augmenter la puissance d'émission des stations au-delà du strict nécessaire.

Un terminal radio mobile reçoit donc, à un niveau utile, les émissions de deux stations lorsqu'il est dans la zone de recouvrement de deux cellules. En pratique, il en reçoit beaucoup plus et, s'il est alors mis sous tension, il se rattache à la station la plus proche, au sens radio, c'est-à-dire lui fournissant le niveau radio le plus élevé parmi les six meilleures. Dans la zone de recouvrement, les émissions de la station non sélectionnée par le terminal constituent un signal parasite d'interférence, du même ordre de grandeur que le signal utile de la cellule de rattachement. En outre, les signaux des deux stations étant constitués de trames de même structure, le terminal ne pourrait pas effectuer un filtrage spécifique de spectre pour atténuer le signal parasite.

Pour établir le réseau radio, l'opérateur dispose d'une plage de fréquences qui lui a été allouée et qui constitue une ressource chère. Dans cette plage, il répartit régulièrement des fréquences porteuses, ou canaux de transmission, le pas de fréquence séparant deux porteuses étant suffisant pour que l'interférence intercanaux, compte tenu de la sélectivité des récepteurs, reste inférieure à un seuil de bon fonctionnement déterminé.

Le nombre des valeurs de fréquences porteuses disponibles est cependant bien inférieur au nombre de canaux nécessaires dans la totalité du réseau. Il faut donc utiliser plusieurs fois la même valeur de fréquence, mais il faut vérifier que, dans chaque cellule prévue, le niveau de parasites à la fréquence de sa ou ses porteuses, en provenance des stations des autres cellules du voisinage, reste en dessous du seuil de bon fonctionnement. En d'autres termes, en tout point d'une cellule, il faut garantir une marge de sécurité entre le niveau de signal utile reçu et le niveau de signal parasite à la fréquence considérée. Comme un réseau comporte quelques milliers de stations qui se perturbent mutuellement, un calcul de ces perturbations nécessite un grand nombre d'heures de calcul par un calculateur classique, de puissance moyenne.

Le problème se complique en outre par le fait qu'un terminal, déjà rattaché à une station, tolère une inversion entre les niveaux relatifs des signaux reçus de sa station et d'une autre station, et ne se rattache à cette dernière que si l'écart des niveaux dépasse une valeur de seuil d'hystérésis. En outre, les niveaux reçus en provenance des diverses stations sont susceptibles d'évoluer aléatoirement dans le temps, en fonction des conditions de transmission radio et de la position du terminal mobile.

De plus, les signaux parasites de trames des stations distantes ont des énergies moyennes qui évoluent avec le trafic et, en outre, les phases de leurs porteuses reçues peuvent mutuellement glisser et ainsi produire une modulation aléatoire de l'amplitude instantanée du signal parasite composite reçu, qui en est la somme vectorielle.

Lorsque l'opérateur veut planifier le réseau en déterminant les positions des stations et leurs caractéristiques radio, le plan d'attribution des fréquences doit donc être le résultat de calculs d'optimisation visant à attribuer chaque valeur de porteuse un nombre maximal de fois dans le réseau, tout en garantissant au mieux la marge de sécurité sur le signal utile, compte tenu des aléas mentionnés ci-dessus.

La marge de sécurité va entre autre être définie par l'utilisation de matrices de contraintes exprimant des contraintes à respecter entre les différentes cellules du réseau.

En effet il était déjà connu d'utiliser des matrices de contraintes dites "dures" pour les calculs de planification, mais ces matrices étaient souvent déterminées dès le départ par des critères fixés par le programmeur pour les utiliser ensuite pour la planification.

A titre d'exemple le programmeur décidait de sa matrice en affectant un coefficient, par exemple, la valeur zéro à l'intersection de la colonne Cj et de la ligne Ci de la matrice de contrainte, lorsque l'écart entre les deux canaux de deux cellules Ci, Cj était égal à zéro (c'est-à-dire lorsque les deux cellules avaient la même fréquence), la valeur "un" lorsque l'écart entre les fréquences respectives avait une première valeur déterminée et la valeur "deux" lorsque l'écart entre les fréquences respectives avait une deuxième valeur déterminée.

Une telle définition était figée une fois pour toutes et de plus de façon subjective.

Un tel procédé est divulgué par le document US 5, 768, 687.

La présente invention vise à fournir un outil pour permettre cette optimisation par la création de matrices de contraintes qui soient le plus proche possible de la réalité, en vue de leur utilisation pour la planification d'un réseau de radiotéléphonie cellulaire.

A cet effet, l'invention concerne un procédé de création de matrices de contraintes en vue de leur utilisation dans la planification d'un réseau de radiotéléphonie cellulaire, dans lequel, disposant d'un nombre déterminé de valeurs de fréquences porteuses prédéterminées à attribuer à une pluralité de stations radio de base, de positions et puissances d'émission déterminées dans une zone de service, prévues pour gérer une pluralité correspondante de cellules radio qui jouent le rôle de cellule serveuse ou brouilleuse, comportant les étapes suivantes :

-   d'après les positions de chaque maille d'une cellule serveuse le système de calcul élabore une prédiction représentative de la valeur C du champ reçu dans cette maille de la zone de service à l'une des fréquences prédéterminées de la cellule serveuse,

-   dans chacune de ces mailles, le système de calcul calcule la valeur I du champ d'interférence créé par chacune des autres cellules que le système considère comme cellule brouilleuse vis-à-vis de la cellule supposée comme serveuse par le système de calcul,

-   dans chacune de ces mailles, le système de calcul calcule la valeur du rapport C/I pour la cellule « serveuse » où I représente le champ d'interférence créé par chacune des autres cellules brouilleuses de la zone de service et dont la valeur de champ brouilleur I reçu dans la maille est supérieure à une valeur prédéterminée « CHAMP_MINI_ BROUILLEUR » mémorisée au départ par le système de calcul,

-   par une opération d'intégration sur l'ensemble de la zone de service, le système de calcul détermine le taux de brouillage global $tb_{ij}$ de la cellule serveuse par les cellules brouilleuses, ces valeurs peuvent alors être affichées ou mémorisées dans une matrice dite initiale de contraintes en représentant ou mémorisant des niveaux (Ki, Li, Mi) aux intersections des lignes de désignation des cellules serveuses et des colonnes de désignation des cellules brouilleuses.

-   le système détermine à partir de cette matrice de contrainte dite "initiale" des probabilités de service à l'initialisation qui représentent la probabilité pour qu'une cellule donnée soit la cellule serveuse fournissant au mobile le champ le plus élevé, la probabilité de service étant déduite de l'écart entre la valeur du champ prédite et la valeur modifiable d'un champ «CHAMP_MINI» mémorisé dans un fichier «Frequences.txt».

Selon une autre particularité du procédé une première matrice ou tableau est déterminée en supposant chaque cellule serveuse et chaque cellule brouilleuse en cocanal.

Selon une autre particularité du procédé ladite valeur modifiable du champ CHAMP_MINI correspond à une probabilité de service de 50% , et

-   le système de calcul sélectionne les trois cellules constituant les meilleurs serveurs par comparaison des valeurs de la matrice,

-   puis détermine des probabilités d'assignation par calcul et stocke ces probabilités dans une matrice de contrainte d'assignation.

Selon une autre particularité du procédé dans chaque maille, le système de calcul applique à chacune de ces cellules serveuses potentielles un coefficient de pondération qui comporte trois composantes.

-   probabilité d'assignation

-   probabilité de service

-   pondération de sursol,

ces trois coefficients étant combinés au niveau de chaque maille pour affecter d'un poids chacune des trois cellules meilleurs serveurs et rendre compte de la probabilité qu'a chacune d'entre elles d'être la cellule serveuse.

Selon une autre particularité du procédé le système calcule, à l'aide des trois probabilités des trois meilleurs serveurs, et d'une relation qui les lient aux probabilités pij de transition d'une cellule cell_i vers une autre cellule cell_j en tenant compte de la marge d'hystérésis du "handover" Hom, une seule valeur Proba_init qui permet ainsi de constituer de proche en proche et déterminer une matrice de probabilité initiale.

Selon une autre particularité du procédé la probabilité d'assignation rend compte de la répartition probable du temps alloué à chacune des trois cellules serveuses potentielles sur la durée d'une communication, cette probabilité est calculée sur la base de la différence de champ prédit entre les cellules serveuses potentielles et tient compte d'une valeur moyenne de marge de basculement "HO_MARGIN" égale à 5 dB en fait.

Selon une autre particularité du procédé les valeurs de probabilité sont mémorisées dans le fichier "Proba_ assig.txt".

Selon une autre particularité du procédé le coefficient de sursol (ou coefficient morphologique) permet de rendre compte des flux naturels de "handover" qui suivent la morphologie du terrain, les cellules ayant le même sursol que la cellule serveuse courante étant favorisées, ce coefficient étant fourni par un fichier « Poids.txt » qui se présente sous la forme d'une matrice faisant intervenir la classe de sursol et le type d'axe de circulation auxquels appartient la maille

Selon une autre particularité du procédé le système de calcul effectue les mêmes calculs que dans l'une des revendications 1, 3 à 4 pour les cellules utilisant des fréquences à canal adjacent au canal de fréquence de la cellule serveuse.

Selon une autre particularité du procédé le système de calcul prend également en compte les constats de brouillage et les voisinages sont pris en compte en ajoutant leur influence (en brouillage cocanal et canal adjacent) aux résultats obtenus à partir de la couverture, cette influence est donnée sous la forme d'un taux fourni par le fichier « Fréquences.txt »enregistré en mémoire.

Selon une autre particularité du procédé le système de calcul disposant de tables de statistiques de fluctuations de conditions de propagation radio affectant les niveaux de réception des émissions des stations, le système détermine des probabilités correspondantes pour qu'un signal reçu présente un niveau le plus élevé de tous sur une durée déterminée.

Un autre but de l'invention est de proposer un dispositif de création de matrices de contraintes permettant de mieux tenir compte de la réalité.

Ce but est atteint par le fait que le dispositif de création de matrices de contraintes en vue de leur utilisation dans un système permettant la planification d'un réseau de radiotéléphonie cellulaire, dans lequel, un système informatique dispose de moyens d'attribuer un nombre déterminé de valeurs de fréquences porteuses prédéterminées à attribuer à une pluralité de stations radio de base, de positions et puissances d'émission déterminées dans une zone de service et mémorisées dans une base de données, prévues pour gérer une pluralité correspondante de cellules radio qui jouent le rôle de cellule serveuse ou brouilleuse, comportant des moyens d'élaborer, d'après les positions de chaque maille (P) d'une cellule serveuse, une prédiction représentative de la valeur C du champ reçu dans cette maille de la zone de service à l'une des fréquences prédéterminées de la cellule serveuse,

- des moyens de calculer pour chacune de ces mailles, la valeur I du champ d'interférence créé par chacune des autres cellules que le système considère comme cellule brouilleuse vis-à-vis de la cellule supposée comme serveuse par le système de calcul et des moyens de mémorisation de ces valeurs I.

- des moyens de calculer pour chacune de ces mailles, la valeur d'un rapport C/I pour la cellule « serveuse » où I représente le champ d'interférence I créé par chacune des autres cellules brouilleuse de la zone de service et dont la valeur de champ brouilleur I reçu dans la maille est supérieure à une valeur prédéterminée « CHAMP_MINI_ BROUILLEUR » mémorisée au départ par le système de calcul.

- des moyens d'effectuer une opération d'intégration sur l'ensemble de la zone de service, le système de calcul détermine le taux de brouillage global $tb_{ij}$ de la cellule serveuse par les cellules brouilleuses, ces valeurs peuvent alors être affichées ou mémorisées par des moyens dans une matrice dite initiale de contraintes en représentant ou mémorisant des niveaux (Ki, Li, Mi) aux intersections des lignes de désignation des cellules serveuses et des colonnes de désignation des cellules brouilleuses.

Selon une autre particularité du dispositif les moyens sont utilisés pour calculer une première matrice ou tableau déterminée en supposant chaque cellule serveuse et chaque cellule brouilleuse en cocanal, puis une deuxième matrice en supposant chaque cellule brouilleuse en canal adjacent de la cellule serveuse.

Selon une autre particularité du dispositif, ladite valeur modifiable de CHAMP_MINI correspond à une probabilité de service de 50%, ledit dispositif comportant

des moyens de sélection du système de calcul sélectionnant ainsi les trois cellules constituant les meilleurs serveurs par comparaison des valeurs de la matrice,

et des moyens de détermination des probabilités d'assignation par calcul et de stockage de ces probabilités dans une matrice de contrainte d'assignation.

Selon une autre particularité du dispositif, dans chaque maille, le système de calcul comporte des moyens de mémorisation de trois coefficients constitués par un coefficient de:

- probabilité d'assignation

- probabilité de service

- pondération de sursol, et des moyens de combiner ces coefficients au niveau de chaque maille pour affecter d'un poids chacune des trois cellules meilleurs serveurs et rendre compte de la probabilité qu'a chacune d'entre elles d'être la cellule serveuse.

Selon une autre particularité du dispositif le système calcule, à l'aide des trois probabilités des trois meilleurs serveurs extraites des matrices calculées, et d'une relation qui lie ces probabilités aux probabilités pij de transition d'une cellule cell_i vers une autre cellule cell_j en tenant compte de la marge d'hystérésis du "handover" Hom, une seule valeur Proba_init qui permet ainsi de constituer de proche en proche et déterminer une matrice de probabilité initiale.
Selon une autre particularité du dispositif, les valeurs de probabilité d'assignation sont mémorisées dans le fichier "Proba_assig.txt".
Selon une autre particularité du dispositif, le coefficient de sursol est fourni par un fichier « Poids.txt » qui se présente sous la forme d'une matrice faisant intervenir la classe de sursol et le type d'axe de circulation auxquels appartient la maille.
Selon une autre particularité du dispositif, le système de calcul comporte des moyens interactifs permettant la prise en compte des constats de brouillage et des voisinages en ajoutant leur influence (en brouillage cocanal et canal adjacent) aux résultats obtenus des calculs précédents, cette influence étant mémorisée sous la forme d'un taux fourni par un fichier «Fréquences.txt» enregistré en mémoire.
Ainsi, l'environnement radio de la cellule est défini avec une meilleure précision, ce qui permet par la suite de mieux pouvoir planifier les fréquences tout en ne nécessitant qu'une puissance de calcul limitée.
Ainsi, il est facile de sélectionner un nombre limité de stations, les plus perturbatrices, et on limite donc la puissance de calcul requise, tout en fournissant une bonne précision par le fait que la matrice de contrainte tient mieux compte de la réalité du terrain dans les prévisions de parasites.
La valeur du signal composite a ainsi une valeur qui représente bien la diversité des conditions radio aux divers points de la cellule, et fournit donc un modèle fiable pour la comparaison.
La modélisation évoquée ci-dessus est ainsi encore améliorée par prise en compte des perturbateurs à fréquences proches, compte tenu de la qualité de réjection de ceux-ci prévue pour les mobiles récepteurs.
L'invention sera mieux comprise à l'aide de la description suivante d'un mode préféré mais non limitatif de mise en oeuvre du procédé de l'invention, en référence aux dessins annexés, dans lesquels :

- la figure 1 représente schématiquement une partie d'un réseau de radiotéléphonie cellulaire en cours d'élaboration,

- les figures 2.1 et 2.2 représentent chacune une matrice de coefficients de perturbation entre cellules, servant de base de données et obtenue à partir de la mise en oeuvre du procédé de l'invention,

- la figure 3.1 représente respectivement les influences de trois cellules entre elles pour l'élaboration des probabilités de perturbation entre cellules, servant de base de données à la détermination des matrices de contrainte,

- la figure 3.2 représente le diagramme à états pour le calcul des probabilités d'assignation entre les trois cellules,

- la figure 3.3 représente les probabilités d'assignation entre les 3 cellules serveuses,

- la figure 4.1 représente un graphique sur l'évolution des valeurs de probabilité d'assignation en fonction de l'écart de valeur de champ entre C0 et C2 (quand C1=C2).

- la figure 4.2 représente l'évolution de la probabilité de service pour des valeurs d'écart données.

- la figure 4.3 représente la matrice faisant intervenir la classe de sursol et le type d'axe de circulation.

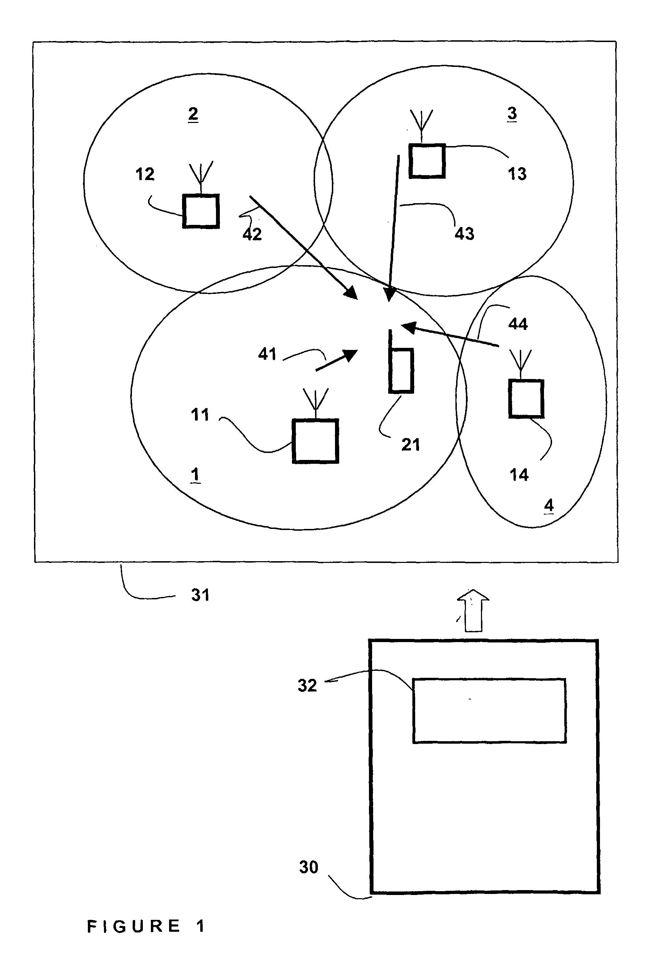

La figure 1 représente une carte 31 d'une zone géographique d'un réseau de radiotéléphonie cellulaire en cours de définition, sur laquelle ont été reportées les positions prévues de quatre cellules radio, respectivement référencées 1, 2, 3 et 4, entourant des stations de base respectives 11, 12, 13 et 14. Comme représenté, les cellules 1 à 4 sont proches les unes des autres, des zones de bord de la cellule 1 étant même en recouvrement avec ceux des trois autres cellules 2 à 4.

La carte 31 est une représentation de données d'une carte numérique 32 stockée dans une base de données d'un calculateur 30. La carte numérique 32 spécifie les reliefs naturels et artificiels, ainsi que leur nature, telle que forêt, immeubles et autres, ce qui permet de calculer une estimation de l'atténuation radio de la liaison en fonction des reliefs définis par la carte numérique 32.

L'opérateur du réseau à implanter dispose d'une plage de fréquences et y a défini une pluralité, par exemple 62, de valeurs de fréquences de porteuses constituant des canaux de transmission, numériques dans cet exemple, tels que ceux du réseau GSM. Les valeurs des fréquences sont également réparties dans la plage considérée selon un pas de fréquence déterminé en fonction de la sélectivité en fréquence des stations de base 11 à 14 et des terminaux mobiles de radiotéléphonie prévus, comme celui référencé 21, dessiné dans la cellule 1.

Comme l'illustrent les flèches 41, 42, 43 et 44, le terminal 21 peut recevoir les émissions des quatre stations ou cellules 11 à 14, les réceptions respectives représentant un signal utile fourni par la cellule serveuse ou un parasite d'interférence délivré par une des autres cellules dites brouilleuses. La cellule serveuse en un point du réseau est la cellule qui assure la communication. Il s'agit donc de la cellule qui a été sélectionnée par le terminal mobile de radiotéléphonie en veille lors de l'établissement de la communication ou celle qui a été choisie comme cible lors d'une commutation de cellule serveuse dite "handover". Un bilan de liaison radio correspondante peut être estimé d'après les positions relatives des stations 11 à 14 par rapport à celle du terminal mobile 21, c'est-à-dire un calcul de l'atténuation de transmission. Cette atténuation dépend en particulier de la distance entre l'émetteur considéré et le terminal récepteur 21 et peut facilement être calculée pour une propagation en espace libre dans l'air, à partir d'une valeur d'atténuation linéique qui vaut environ 20 dB/km pour la plage de fréquences considérée et pour les 500 premiers mètres, et 30 dB/km au-delà. Le cas échéant, en cas d'obstacles radio, les renseignements sur les reliefs fournis par la base de données 32 permettent d'estimer le bilan de liaison sur une trajectoire de propagation déterminée. Lorsque l'endroit de réception est choisi sensiblement en vue directe des stations émettrices 12 à 14, un calcul d'atténuation de la propagation, pour déterminer le niveau de réception, peut s'effectuer très simplement, en considérant que l'atténuation est celle d'une propagation en espace libre et est représentée par le nombre prédéterminé de décibels par kilomètre (20 ou 30 dB/km). On peut aussi se procurer les valeurs de niveaux de réception par des mesures sur le terrain.

Par vue directe, on entend le fait que le premier ellipsoïde de Fresnel n'est pas sensiblement obturé par un obstacle radio. On rappellera que le premier ellipsoïde de Fresnel se définit comme étant le volume engendré par rotation autour de l'axe longitudinal d'une ellipse comportant l'émetteur et le récepteur 21 à ses foyers respectifs, à une distance déterminée, l'excentricité étant définie par le fait que la somme des deux distances de tout point de la surface de l'ellipsoïde aux foyers n'excède pas la distance inter-foyers de plus d'une longueur d'onde de la porteuse. En d'autres termes, la majeure partie de l'énergie reçue à un foyer est transmise à l'intérieur du premier ellipsoïde de Fresnel. De ce fait une absence d'obstacle important dans cet ellipsoïde correspond à une transmission dans l'air, sans atténuation supplémentaire.

La carte 31 ainsi renseignée permet donc au calculateur 30 de calculer en tout point un niveau prévisionnel de champ C radioélectrique de réception des signaux des stations 11 à 14, si l'on a préalablement fixé leur niveau d'émission.

Ayant choisi a priori les positions des stations 11 à 14 et leurs puissances d'émission, il s'agit alors de déterminer le degré de confinement géographique acceptable pour une même valeur de fréquence porteuse. En effet, comme exposé plus haut, il est souhaitable de réutiliser une même valeur de fréquence porteuse un nombre maximal de fois, sans toutefois que les interférences entre cellules ne dégradent la qualité du service radio au-delà d'un seuil déterminé.

Afin de déterminer si ce seuil est atteint dans la cellule 1 par exemple, il est effectué une simulation, en pratique au moyen du calculateur 30, pour estimer le niveau de champ I dû aux parasites sur une fréquence porteuse déterminée.

A cet effet, pour planifier le réseau de radiotéléphonie cellulaire, dans lequel on dispose d'un nombre déterminé, donc limité, de valeurs de fréquences porteuses à attribuer à la pluralité de stations radio de base 11 à 14, le procédé de l'invention permet d'évaluer des matrices de contraintes par les étapes suivantes :

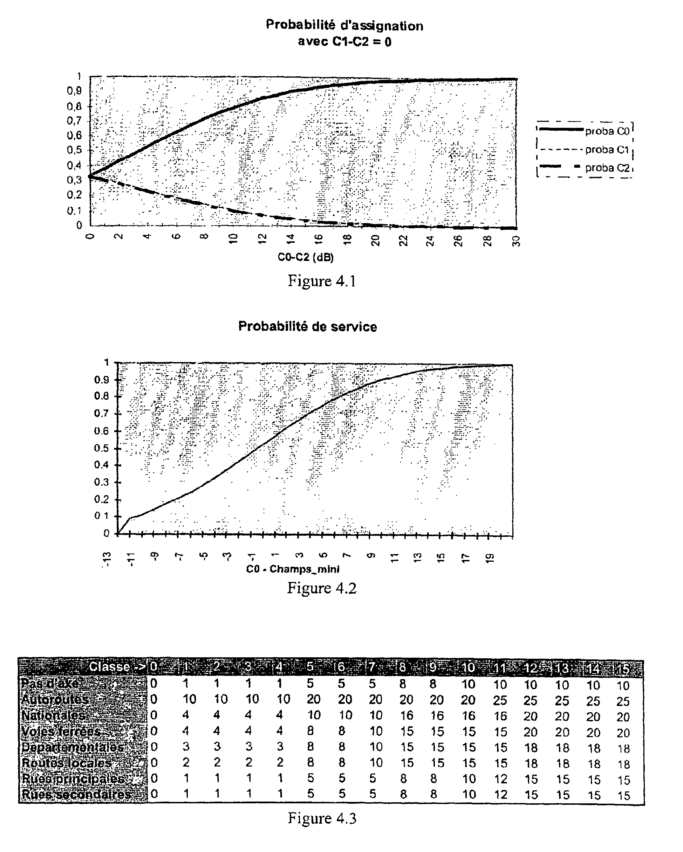

Les premiers éléments constitutifs de la matrice de contraintes sont élaborés à partir de la prédiction calculée par le système de calcul pour chacune des cellules ayant un impact dans la zone de service. Cette prédiction est décrite, pour une cellule, par la valeur C du champ reçu dans chaque maille p (figure 4.1) de la zone de service. Dans chacune de ces mailles, le système de calcul calcule la valeur du rapport C/I pour la cellule «serveuse», par exemple Cell-1, et chacune des autres cellules brouilleuses de la zone de service, par exemple Cell-2, Cell-3 fig. 4.1, (dont la valeur de champ reçu dans la maille est supérieure à une valeur prédéterminée « CHAMP_MINI_BROUILLEUR » mémorisée au départ par l'utilisateur dans un fichier « Frequences.txt » du système de calcul 30). La valeur I représente le champ brouilleur correspondant à une cellule brouilleuse (par exemple Cell-j) de la cellule serveuse (par exemple Cell-i).

De ces valeurs, on peut déduire l'existence d'un brouillage de la cellule serveuse par les autres cellules en cocanal. Ce rapport est également calculé en canal adjacent pour chaque maille P.

Par une opération d'intégration sur l'ensemble de la zone de service, il est alors possible de déterminer le taux de brouillage global $tb_{ij}$ de la cellule serveuse par les cellules brouilleuses. Ces valeurs peuvent alors être reportées dans la matrice de contraintes.

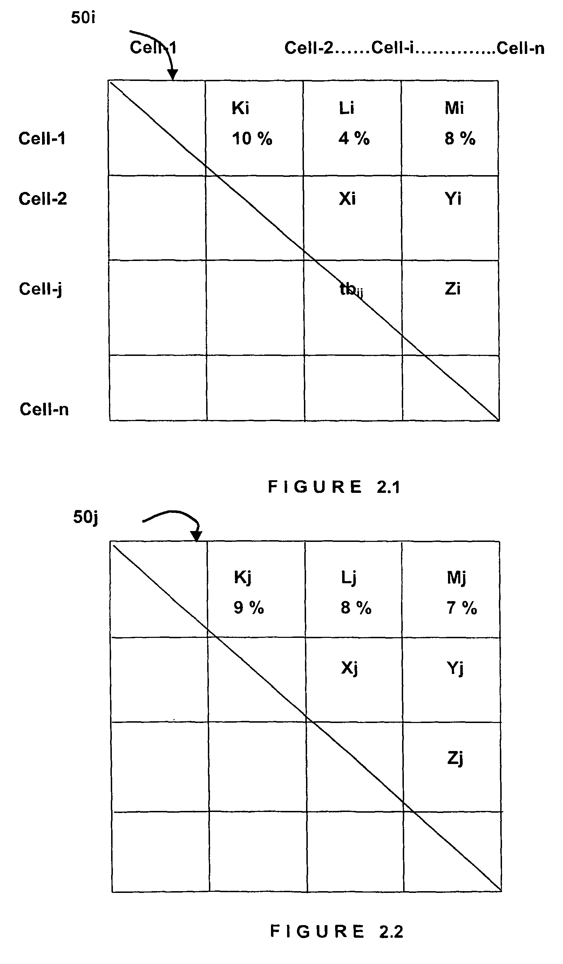

La figure 2 représente une matrice carrée 50i de valeurs d'influences ou perturbations mutuelles entre toutes les cellules 1 à 4 du réseau, appelée matrice de contraintes, ceci pour l'une, $f_i$, des valeurs de fréquences porteuses. La matrice 50i permet ainsi de présenter de façon synthétique, à un logiciel de planification du réseau exploité par le système de calcul 30 ou à un opérateur humain utilisant ce système de calcul, le taux de brouillage $tb_{ij}$ en chaque intersection ligne-colonne de la matrice de la cellule serveuse Cell-j correspondant à la ligne j par la cellule brouilleuse Cell-i correspondant à la colonne i pour l'utiliser dans le choix d'attribution des fréquences aux stations 11 à 14. Cette évaluation des taux de brouillage $tb_{ij}$ permet d'évaluer deux matrices, une première d'évaluation des brouillages cocanal et une deuxième d'évaluation des brouillages en canal adjacent. Un brouillage cocanal est une interférence due à la réutilisation de la même porteuse dans des cellules voisines. Un brouillage en canal adjacent est une interférence due à l'utilisation de porteuses adjacentes dans des cellules voisines.

Le procédé de l'invention permet éventuellement de tenir compte d'un constat de brouillage. Un constat de brouillage en un point entre deux cellules déterminées est un brouillage identifié notamment par des mesures «terrain». Le système de calcul prend en compte un constat de brouillage en ajoutant la valeur du champ «Taux_Exception» d'un fichier «FREQUENCE.TXT» mémorisé dans le système de calcul à l'élément correspondant dans la matrice de contraintes.

Ainsi, les niveaux de perturbation de la cellule 1 par les cellules 2, 3, 4 atteignent les valeurs respectives Ki, Li et Mi. De même, la cellule 2 est perturbée à des niveaux Xi et Yi par les cellules respectives 3 et 4, ces deux dernières se perturbant mutuellement à un niveau Zi. Des matrices du même type, comme la matrice 50j pour la fréquence $f_j$ de la figure 2.1, peuvent être établies pour les diverses valeurs de fréquences porteuses, ce qui permet de disposer d'une vue d'ensemble des contraintes d'interférences radio Kj, Lj, Mj, Xj, Yj, Zj. Chaque matrice 50i ou 50j est en fait un bloc de données utilisable par le calculateur 30, la représentation qui en est ici faite étant à but illustratif.

Si, dans chaque maille P de la zone de service, la cellule serveuse Cell-i était systématiquement la cellule "best-server" c'est-à-dire ayant la meilleure probabilité, les calculs précédents seraient immédiats et simples. Toutefois, ils ne rendraient pas bien compte de la réalité de fonctionnement du réseau. Les variations du champ reçu et les déplacements locaux du mobile durant une communication entraînent des fluctuations et par voie de conséquence le changement de cellule serveuse (handover). Pour une maille donnée, la cellule serveuse peut, selon les principes de handover de la norme GSM être la cellule serveuse courante ou l'une de ses six meilleures voisines désignées. Pour des raisons pratiques (temps de calcul et ressources informatiques limitées), pour chacune des mailles de la zone de service, le système de calcul ne prend en compte comme cellules serveuses potentielles que les cellules Cell_0, Cell_1, Cell_2 ayant une première valeur de champ (C0), une seconde valeur (C1) et une troisième valeur (C2).

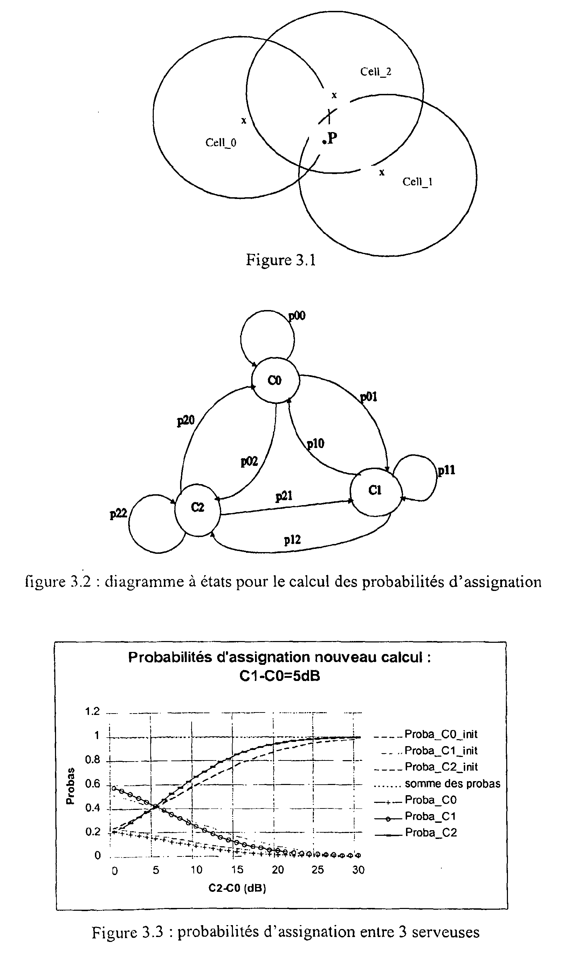

L'objectif est d'avoir un calcul de probabilités traduisant au mieux la réalité du système lorsque l'on considère les trois cellules qui peuvent constituer chacune un meilleur serveur (best server). Ce calcul est basé sur l'utilisation du diagramme à états pour les trois cellules représenté à la figure 3.2, l'état initial correspondant à la mise sous tension du mobile. Pour effectuer ce calcul on utilise les notations suivantes:

Proba_Ci(P) : est la probabilité pour que le pixel P de la zone de couverture soit assigné à la cellule cell_i.

Proba_Ci_init(P) :est la probabilité (Proba_Ci(P)) pour que le pixel P de la zone de couverture soit assigné à la cellule cell_i, à l'allumage du mobile.

HOm : la marge d'hystérésis du "handover"

Considérons trois cellules Cell_0, Cell_1 et Cell_2 (figure 3.1). Le champ mesuré en un pixel P de la zone couverte par ces trois cellules est C0(P) issu de Cell_0, C1 (P) issu de Cell_1 et C2(P) issu de Cell_2.

Un mobile qui se trouve en P capte un champ qui évolue avec une statistique gaussienne de valeur moyenne C0, respectivement C1 et C2 qui varie en log normal. La probabilité pour que ce mobile soit assigné à la cellule i, ($i \in \{0,1,2\}$), à sa mise sous tension (probabilité d'assignation " à l'init") est la probabilité pour que le champ Ci(P) soit le plus grand. La statistique étant la même pour les trois champs en P, cette probabilité ne dépend que de la valeur moyenne Ci des champs reçus et de l'écart type du modèle de propagation qui est pris à 8 dB dans notre cas.

Le système de calcul 30 manipule les valeurs moyennes. Ainsi, en chaque pixel P, nous avons pour les trois meilleures serveuses, trois valeurs moyennes C0, C1 et C2 ordonnées. Aussi pour calculer les probabilités d'assignation, le système fait intervenir uniquement l'écart entre les trois valeurs moyennes. Ce qui nous permet toujours de nous ramener à un des trois cas d'écart type suivant:

- 0;

- champ_plus_fort-champ_plus-petit;

- champ_intermédiaire-champ_plus_petit).

Par exemple, supposons que l'ordonnancement entre les valeurs moyennes soit le suivant: $C2 \geq C1 \geq C0$, le système calculera pour chaque cellule serveuse Ci la probabilité Proba_Ci_init(C2-C0,C1-C0). Ainsi

- Proba_C0_init(C2-C0,C1-C0) traduit le nombre de fois où le champ issu de la gaussienne de valeur moyenne la plus petite des trois a été le plus grand,

- Proba_C1_init(C2-C0,C1-C0) traduit le nombre de fois où le champ issu de la gaussienne de valeur moyenne intermédiaire a été le plus grand,

- Proba_C2_init(C2-C0,C1-C0) traduit le nombre de fois où le champ issu de la gaussienne de valeur moyenne la plus grande des trois a été le plus grand.

Les résultats obtenus représentés sur la figure 3.3 sous l'intitulé Proba_Ci_init montrent pour une probabilité donnée l'assignation d'une cellule selon les variations de C2-C0 comprises entre 0 et 30 dB et pour une valeur C1-C0 maintenue fixe égale à 5 dB. Ainsi pour une probabilité inférieure à 0,2 la cellule serveuse sera celle qui génère le champ C0 jusqu'à un écart C2-C0 > 12dB. Pour une probabilité comprise entre 0,4 et 0,6 la cellule serveuse sera celle qui génère le champ C1 jusqu'à un écart de 7dB puis deviendra celle qui génère le champ C2.

Le procédé de l'invention permet de calculer les probabilités d'assignation d'une cellule en tant que serveur avec prise en compte de la marge d'hystérésis du "handover" Hom.

Les probabilités Proba_Ci_init calculées précédemment ne représentent que l'état " initial " pour le calcul des probabilités d'assignation. On utilise le diagramme à états de la figure 3.2. Les pij sont des probabilités de transition d'une cellule cell_i vers une autre cellule cell_j en tenant compte de la marge d'hystérésis du "handover" HOm.

Les probabilités en cours de fonctionnement à un instant n dépendent de la probabilité de l'instant n-1 et de la probabilité de transition selon les équations ci-après:

$$\text{Proba\_C0}(n) = \text{Proba\_C0}(n-1)*p00 + \text{Proba\_C1}(n-1)*p10 + \text{Proba\_C2}(n-1)*p20$$

$$\text{Proba\_C1}(n) = \text{Proba\_C1}(n-1)*p11 + \text{Proba\_C0}(n-1)*p01 + \text{Proba\_C2}(n-1)*p21$$

$$\text{Proba\_C2}(n) = \text{Proba\_C2}(n-1)*p22 + \text{Proba\_C0}(n-1)*p02 + \text{Proba\_C1}(n-1)*p12$$

Avec

$$p01 = proba(C1>C0+HOm \ \&\& \ C1>C2)$$

$$p02 = proba(C2>C0+HOm \ \&\& \ C2>C1)$$

$$p00 = proba(C0>C1\text{-}HOm \,\&\&\, C0>C2\text{-}HOm) = 1\text{-}p01\text{-}p02$$

$$p10 = proba(C0>C1\text{+}HOm \,\&\&\, C0>C2)$$

$$p12 = proba(C2>C1\text{+}HOm \,\&\&\, C2>C0)$$

$$p11 = proba(C1>C0\text{-}HOm \,\&\&\, C1>C2\text{-}HOm) = 1\text{-}p10\text{-}p12$$

$$p20 = proba(C0>C2\text{+}HOm \,\&\&\, C0>C1)$$

$$p21 = proba(C1>C2\text{+}HOm \,\&\&\, C1>C0)$$

$$p22 = proba(C2>C0\text{-}HOm \,\&\&\, C2>C1\text{-}HOm) = 1\text{-}p21\text{-}p20$$

Les probabilités d'assignation sont obtenues lorsque Proba_Ci(n) $\approx$ Proba_Ci(n-1) c'est-à-dire lorsqu'elles convergent après plusieurs itérations vers une asymptote. Elles sont représentées sur la figure 3.3 pour C1-C0 = 5 dB.

Nous pouvons remarquer que la somme des probabilités est effectivement égale à un tout le temps.

D'autre part, pour une même valeur moyenne, nous avons la même probabilité. Enfin, nous notons par ailleurs comme prévu l'effet de l'hystérésis qui privilégie la serveuse courante (par rapport aux probabilités à " l'init ").

Les probabilités d'assignation calculées précédemment dépendent de la valeur paramétrable de la marge d'hystérésis du basculement de cellule serveuse ("handover") Hom. Il est important de conserver cette possibilité de paramétrage sur le système de calcul. La procédure pourrait être la suivante :

1 - En entrée, le système de calcul dispose des probabilités à l'initialisation "l'init". Il s'agit des probabilités qui ont été calculées au début par le système. Elles ne dépendent pas de la marge d'hystérésis du "handover" HOm mais uniquement de la valeur moyenne du champ. Avec les relations qui lient les trois probabilités des trois meilleurs serveurs, une seule valeur permet de déterminer les deux autres. Une matrice Proba_init[36][36] sera fournie, sachant que nous nous sommes limités à un écart maximum de 36 dB entre les C, C1 et C2, au-delà les probabilités deviennent proches de zéro.

2 - A partir de Proba_init[36][36] et de HOm, les probabilités d'assignation seront calculées au début du module CONTRAINTES et stockées.

3 - Ensuite, pour chaque pixel, on ira récupérer la probabilité correspondante en fonction des trois meilleures serveuses.

Dans chaque maille, le système de calcul applique à chacune de ces cellules serveuses potentielles un coefficient de pondération qui comporte trois composantes :

- probabilité d'assignation,

- probabilité de service,

- pondération de sursol.

La probabilité d'assignation rend compte de la répartition probable du temps alloué à chacune des trois cellules serveuses potentielles sur la durée d'une communication. Cette probabilité est calculée sur la base de la différence de champ prédit entre les cellules serveuses potentielles et tient compte d'une valeur moyenne de marge de basculement HO_MARGIN égale à 5 dB. Les valeurs de probabilité sont obtenues dans le fichier « Proba_assig.txt ». Le graphique de la figure 4.1 donne l'évolution des valeurs de probabilité d'assignation en fonction de l'écart de valeur de champ entre C0 et C2 (quand C1=C2).

La probabilité de service fait prendre en compte la capacité d'une cellule à être en mesure d'assurer effectivement le service (fonction de la valeur du champ reçu de cette cellule dans la maille). La probabilité de service est déduite de l'écart entre la valeur du champ prédite et la valeur « CHAMP_MINI » (modifiable) fournie par le fichier « Frequences.txt ». CHAMP_MINI est la valeur de champ qui correspond à une probabilité de service de 50%. Ce coefficient a pour effet de renforcer le taux de brouillage en fonction du niveau de champ (plus fort est le champ, plus fort est le brouillage).

Le graphique représenté en figure 4.2 montre l'évolution de cette courbe pour des valeurs de l'écart C-CHAMP_MINI. On note que pour des valeurs d'écart inférieures à -12dB, la probabilité est forcée à 0.

Enfin, le coefficient de sursol (ou coefficient morphologique) permet de rendre compte des flux naturels de "handover" qui suivent la morphologie du terrain. Les cellules ayant le même sursol que la cellule serveuse courante sont favorisées. Ce coefficient est fourni par un fichier « Poids.txt » qui se présente sous la forme d'une matrice faisant intervenir la classe de sursol et le type d'axe de circulation auxquels appartient la maille. Cette matrice est reproduite en figure 4.3.

Ces trois coefficients sont combinés au niveau de chaque maille pour affecter d'un poids chacune des trois cellules meilleurs serveurs et rendre compte de la probabilité qu'a chacune d'entre elles d'être la cellule serveuse.

Les constats de brouillage et les voisinages sont pris en compte en ajoutant leur influence (en brouillage cocanal et canal adjacent) aux résultats obtenus à partir de la couverture. Cette influence est donnée sous la forme d'un taux fourni par le fichier « Fréquences.txt ».

Ces valeurs sont les suivantes:

- TAUX_EXCEPTION pour les brouillages

- TAUX_ADJ_VOIS_REEL pour les voisinages en canal adjacent et TAUX_COC_VOIS_REEL pour les voisinages en cocanal.

Pour compléter cette première évaluation ou la rectifier en fonction de la réalité du réseau, le système de calcul 30 permet d'incorporer dans la matrice de contraintes les informations suivantes :

- constats de brouillage : qui informent sur la réalité terrain et permettent de pallier les brouillages non prédits ou sous-estimés par le calcul de couverture,

- voisinages : qui impliquent forcément des zones de recouvrement; ces voisines sont celles que détermine le système de calcul, mais également les voisines déclarées dans le réseau déclarées par l'utilisateur,

- zones neutres : qui permettent de ne pas prendre en compte inutilement des brouillages

dans certaines zones (internes ou externes à la zone de service, comme par exemple les forêts).

Les fonctions du système de calcul 30 qui permettent de préparer, de calculer puis de vérifier la matrice de contraintes font l'objet de cette fiche.

1) Prise en compte des constats de brouillage

2) Prise en compte des voisines

3) Prise en compte des zones neutres

4) Calcul de la matrice des contraintes

La prise en compte des constats de brouillage a pour objectif de savoir pondérer le calcul théorique par l'ajout de constats de brouillage mesurés sur le réseau (terrain, statistiques...).

Il s'agit ici de renseigner le système de calcul, avec les brouillages constatés sur le terrain avant même leur calcul théorique. Cela évite une réaffectation possible de canaux sur des cellules dont on connaît déjà l'incompatibilité.

Le système de calcul 30 détermine les brouillages à partir des prédictions de couverture. Celles-ci peuvent être entachées d'erreurs liées à l'imprécision des bases de données terrain et à la méthode de calcul.

Certains brouillages ne sont donc pas détectés par le système de calcul 30.

Les mesures «terrain» et l'expérience de l'ingénieur radio permettent de corriger ces erreurs de prédiction. Les informations correspondantes, appelées constats de brouillage, doivent être fournies à l'outil, afin qu'il en tienne compte dans son calcul des contraintes de brouillage.

Il existe deux types de brouillage :

- le brouillage cocanal

- le brouillage canal adjacent

L'outil permet dans un même fichier (extension .CBR) de déclarer ces deux types de brouillage. Cette déclaration se fait au niveau de l'interface du système de calcul

Ce fichier doit être mis à jour par l'ajout ou la suppression des constats de brouillage avant le calcul de la matrice des contraintes et des plans de fréquences successifs.

La visualisation par « matrice thématique » doit être effectuée pour chacune des cellules de la zone de service. Elle permet de visualiser par exemple les contraintes entre une cellule brouilleuse et des cellules brouillées pour des interférences cocanales ou adjacentes.

Cette visualisation est un bon moyen de vérifier les contraintes. Par exemple, deux cellules peuvent être en regard et ne pas avoir de contraintes calculées alors que l'expérience «terrain» ou les mesures démontrent le contraire. Dans ce cas, il faudra déclarer cette nouvelle contrainte en l'ajoutant dans la liste existante.

Un constat de brouillage en un point entre deux cellules déterminées est un brouillage identifié notamment par des mesures «terrain».

Le système de calcul 30 prend en compte un constat de brouillage en ajoutant la valeur du champ « Taux_ Exception » du fichier « FREQUENCE.TXT » à l'élément correspondant dans la matrice de contraintes.

Pour cela l'utilisateur du système de calcul utilise une interface logicielle lui permettant de Cliquer dans le menu «Fréquences», la commande «Planification» puis la sous commande «Constats de brouillage». Une boite de dialogue «Constats de Brouillage» apparaît à l'écran faisant apparaître une liste "Fréquences / Planification / Constats de Brouillage". L'utilisateur à l'aide de moyens de pointage interactif clique sur le bouton «liste». La boite de dialogue «Constats» apparaît à l'écran.

Si un fichier de constat existe déjà, il suffit de le sélectionner et de cliquer sur le bouton «Valider», sinon il faut taper un nom de fichier dans «Votre Sélection» et appuyer sur la touche «Entrée».

Dans ce dernier cas, le système de calcul 30 demande de confirmer la création de ce fichier par l'interrogation "Création ?".

De retour dans la boîte de dialogue «Constats de brouillage» (soit après avoir «Validé» un fichier existant, soit après avoir «Créé» un nouveau fichier), l'utilisateur clique sur le bouton «Ajouter». Une boite de dialogue «Ajouter Un Constat» apparaît à l'écran. Dans le champ «N° de site» (zone «Utile Public»), l'utilisateur tape le numéro de site dont une cellule est brouillée et valide par la touche «Entrée». La liste des cellules du site s'affiche (ainsi que le nom du site). L'utilisateur sélectionne dans cette liste la cellule brouillée, puis dans le champ «N° de site» (zone «Brouilleur Public»), il tape le numéro de site dont une cellule est brouilleuse et valide par la touche «Entrée» La liste des cellules du site s'affiche (ainsi que le nom du site).

L'utilisateur sélectionne dans cette liste la cellule brouilleuse puis la «Nature du Brouillage», soit «Cocanal», soit «Adjacent». Après avoir saisi le «Nom de Responsable» et « Validé », l'utilisateur de retour dans la boite de dialogue «Constats de Brouillage», répète (en cliquant de nouveau sur le bouton «Ajouter») cette opération autant de fois que nécessaire.

Le système de calcul 30 permet également la prise en compte des cellules voisines ou encore des voisinages. Deux cellules sont déclarées voisines afin de permettre des "handovers"; elles ont nécessairement un recouvrement de leur couverture. L'objectif de cette prise en compte est de savoir pondérer le calcul théorique par l'ajout de données de voisinage (fichier de voisines permettant une diminution des « HO Losses »).

Il s'agit ici de renseigner l'outil sur les voisines déclarées (au sens réseau et pas forcément au sens géographique). Cette déclaration de cellules voisines entre elles, permet d'éviter une affectation de fréquences cocanal ou adjacentes sur ces mêmes cellules, évitant ainsi les risques de brouillage sur les zones de recouvrement de la couverture de ces cellules.

L'enjeu est évidemment de limiter autant que possible ce type d'interférences, cause de nombreux «HO Losses» (indicateur comptabilisant soit les handovers perdus, soit les appels coupés) pour améliorer la qualité des résultats du plan de fréquences.

Pour la déclaration des voisines, le système de calcul 30 propose trois méthodes distinctes :

1. création d'un fichier personnel,

2. importation de données,

3. calcul par le menu «Voisinage» du système de calcul 30.

Le système de calcul prend également en compte des zones neutres. L'objectif est de savoir identifier les zones sans abonné afin de ne pas pénaliser les zones de trafic le cas échéant.

Afin de faciliter et d'améliorer encore le résultat du calcul des fréquences, il est utile de définir les zones neutres dont les cellules n'interviennent pas ou peu dans le trafic écoulé. Effectivement, il est préférable d'ignorer ces zones sans abonné, en acceptant les interférences éventuelles, afin de privilégier la zone à fort trafic et libérer ainsi des fréquences.

Ces zones neutres peuvent par exemple permettre de ne pas « polluer » le calcul d'un plan de fréquences par la protection inutile d'une montagne surplombant une ville.

Autres exemples de zones neutres :

- des lacs (Etang de Berre)

- la mer

- des montagnes

- des forêts

- des zones sans trafic

- les pays étrangers

- ...

Un autre exemple est celui des frontières. Effectivement, en dehors du territoire couvert il est inutile de s'inquiéter d'éventuelles interférences. Les zones neutres ne sont donc pas forcément contenues dans la zone de service.

La modélisation ci-dessus peut aussi prendre en compte des aléas de transmission radio.

En pareil cas, disposant de tables de statistiques de fluctuations des conditions de propagation radio affectant les niveaux de réception des émissions des stations voisines 12 à 14, par exemple les conditions météo, le calculateur 30 détermine des probabilités correspondantes pour qu'une inversion de niveaux relatifs se produise entre deux des niveaux de signaux sélectionnés et modifie l'ordre de classement, et la composition est effectuée, dans le calculateur 30, par pondération des signaux reçus, en fonction des probabilités respectives pour qu'un signal reçu présente un niveau le plus élevé de tous sur une durée déterminée.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de création de matrices de contraintes en vue de leur utilisation dans la planification d'un réseau de radiotéléphonie cellulaire, dans lequel, disposant d'un nombre déterminé de valeurs de fréquences porteuses pré-déterminées ($f_i$, $f_j$) à attribuer à une pluralité de stations radio de base (11 - 14), de positions et puissances d'émission déterminées dans une zone de service, prévues pour gérer une pluralité correspondante de cellules radio (1 - 4) qui jouent le rôle de cellule serveuse ou brouilleuse, comportant les étapes suivantes :

   - d'après les positions de chaque maille (P) d'une cellule serveuse le système de calcul élabore une prédiction représentative de la valeur C du champ reçu dans cette maille de la zone de service à l'une ($f_i$) des fréquences prédéterminées de la cellule serveuse,
   - dans chacune de ces mailles, le système de calcul calcule la valeur I du champ d'interférence créé par chacune des autres cellules que le système considère comme cellule brouilleuse vis-à-vis de la cellule supposée comme serveuse par le système de calcul,

- dans chacune de ces mailles, le système de calcul calcule la valeur du rapport C/I pour la cellule «serveuse» où I représente le champ d'interférence créé par chacune des autres cellules brouilleuse de la zone de service et dont la valeur de champ brouilleur I reçu dans la maille est supérieure à une valeur prédéterminée «CHAMP_MINI_BROUILLEUR» mémorisée au départ par le système de calcul,

- par une opération d'intégration sur l'ensemble de la zone de service, le système de calcul détermine le taux de brouillage global $tb_{ij}$ de la cellule serveuse par les cellules brouilleuses, ces valeurs peuvent alors être affichées ou mémorisées dans une matrice dite initiale de contraintes en représentant ou mémorisant des niveaux (Ki, Li, Mi) aux intersections des lignes de désignation des cellules serveuses et des colonnes de désignation des cellules brouilleuses,

- le système détermine à partir de cette matrice de contrainte dite "initiale" des probabilités de service à l'initialisation qui représentent la probabilité pour qu'une cellule donnée soit la cellule serveuse fournissant au mobile le champ le plus élevé, la probabilité de service étant déduite de l'écart entre la valeur du champ prédite et la valeur modifiable d'un champ «CHAMP_MINI» mémorisé dans un fichier «Frequences.txt».

2. Procédé selon la revendication 1, dans lequel une première matrice ou tableau est déterminée en supposant chaque cellule serveuse et chaque cellules brouilleuses en cocanal.

3. Procédé selon l'une des revendications 1 et 2, dans lequel ladite valeur modifiable de champ CHAMP_MINI correspond à une probabilité de service de 50%, et

- le système de calcul sélectionne les trois cellules constituant les meilleurs serveurs par comparaison des valeurs de la matrice,
- puis détermine des probabilités d'assignation par calcul et stocke ces probabilités dans une matrice de contrainte d'assignation.

4. Procédé selon l'une des revendications 1 à 3, dans lequel dans chaque maille, le système de calcul applique à chacune de ces cellules serveuses potentielles un coefficient de pondération qui comporte trois composantes :

- probabilité d'assignation,
- probabilité de service,
- pondération de sursol,

ces trois coefficients étant combinés au niveau de chaque maille pour affecter d'un poids chacune des trois cellules meilleurs serveurs et rendre compte de la probabilité qu'a chacune d'entre elles d'être la cellule serveuse.

5. Procédé selon l'une des revendications 1 à 4, dans lequel le système calcule, à l'aide des trois probabilités des trois meilleurs serveurs, et d'une relation qui les lient aux probabilités pij de transition d'une cellule cell_i vers une autre cellule cell_j en tenant compte de la marge d'hystérésis du "handover" Hom, une seule valeur Proba_init qui permet ainsi de constituer de proche en proche de déterminer une matrice de probabilité initiale.

6. Procédé selon l'une des revendications 1 à 5, dans lequel la probabilité d'assignation rend compte de la répartition probable du temps alloué à chacune des trois cellules serveuses potentielles sur la durée d'une communication, cette probabilité est calculée sur la base de la différence de champ prédit entre les cellules serveuses potentielles et tient compte d'une valeur moyenne de marge de basculement "HO_MARGIN" égale à 5 dB en fait.

7. Procédé selon l'une des revendications 1 à 6, dans lequel Les valeurs de probabilité sont mémorisées dans le fichier "Proba_assig.txt".

8. Procédé selon la revendications 1 à 7, dans lequel, le coefficient de sursol (ou coefficient morphologique) permet de rendre compte des flux naturels de "handover" qui suivent la morphologie du terrain, les cellules ayant le même sursol que la cellule serveuse courante étant favorisées, ce coefficient étant fourni par un fichier « Poids.txt » qui se présente sous la forme d'une matrice faisant intervenir la classe de sursol et le type d'axe de circulation auxquels appartient la maille.

9. Procédé dans lequel, le système de calcul effectue les mêmes calcul que dans l'une des revendications 1, 3 à 4 pour les cellules utilisant des fréquences à canal adjacent au canal de fréquence de la cellule serveuse.

**10.** Procédé selon l'une des revendications 1 à 9, dans lequel, le système de calcul prend également en compte les constats de brouillage et les voisinages sont pris en compte en ajoutant leur influence (en brouillage cocanal et canal adjacent) aux résultats obtenus à partir de la couverture, cette influence est donnée sous la forme d'un taux fourni par le fichier « Fréquences.txt » enregistré en mémoire.

**11.** Procédé selon l'une des revendications 1 à 10, dans lequel, le système de calcul disposant de tables de statistiques de fluctuations de conditions de propagation radio affectant les niveaux de réception des émissions des stations (12 - 14), le système détermine des probabilités correspondantes pour qu'un signal reçu présente un niveau le plus élevé de tous sur une durée déterminée.

**12.** Dispositif de création de matrices de contraintes en vue de leur utilisation dans un système permettant la planification d'un réseau de radiotéléphonie cellulaire, dans lequel, un système informatique dispose de moyens d'attribuer un nombre déterminé de valeurs de fréquences porteuses prédéterminées ($f_i$, $f_j$) à attribuer à une pluralité de stations radio de base (11 - 14), de positions et puissances d'émission déterminées dans une zone de service et mémorisées dans une base de donnée, prévues pour gérer une pluralité correspondante de cellules radio (1 - 4) qui jouent le rôle de cellule serveuse ou brouilleuse, comportant des moyens d'élaborer, d'après les positions de chaque maille (P) d'une cellule serveuse, une prédiction représentative de la valeur C du champ reçu dans cette maille de la zone de service à l'une ($f_i$) des fréquences prédéterminées de la cellule serveuse,

   - des moyens de calculer pour chacune de ces mailles, la valeur I du champ d'interférence créé par chacune des autres cellules que le système considère comme cellule brouilleuse vis-à-vis de la cellule supposée comme serveuse par le système de calcul et des moyens de mémorisation de ces valeurs I,
   - des moyens de calculer pour chacune de ces mailles, la valeur d'un rapport C/I pour la cellule « serveuse » où I représente le champ d'interférence créé par chacune des autres cellules brouilleuse de la zone de service et dont la valeur de champ brouilleur I reçu dans la maille est supérieure à une valeur prédéterminée « CHAMP_MINI_BROUILLEUR » mémorisée au départ par le système de calcul,
   - des moyens d'effectuer une opération d'intégration sur l'ensemble de la zone de service, le système de calcul détermine le taux de brouillage global $tb_{ij}$ de la cellule serveuse par les cellules brouilleuses. Ces valeurs peuvent alors être affichées ou mémorisées par des moyens dans une matrice dite initiale de contraintes en représentant ou mémorisant des niveaux (Ki, Li, Mi) aux intersections des lignes de désignation des cellules serveuses et des colonnes de désignation des cellules brouilleuses,
   - - des moyens de déterminer à partir de cette matrice de contrainte dite "initiale" des probabilités de service à l'initialisation qui représentent la probabilité pour qu'une cellule donnée soit la cellule serveuse fournissant au mobile le champ le plus élevé, la probabilité de service étant déduite de l'écart entre la valeur du champ prédite et la valeur modifiable d'un champ «CHAMP_MINI» mémorisé dans un fichier «Frequences.txt».

**13.** Dispositif selon la revendication 12, **caractérisé en ce que** les moyens sont utilisés pour calculer une première matrice ou tableau déterminée en supposant chaque cellule serveuse et chaque cellule brouilleuse en cocanal, puis une deuxième matrice en supposant chaque cellule brouilleuse en canal adjacent de la cellule serveuse.

**14.** Dispositif selon l'une des revendications 12 et 13, dans lequel ladite valeur modifiable de champ CHAMP_MINI correspond à une probabilité de service de 50%, ledit dispositif comportant :

   - des moyens de sélection du système de calcul sélectionnant les trois cellules constituant les meilleurs serveurs par comparaison des valeurs de la matrice,

   et des moyens de détermination des probabilités d'assignation par calcul et de stockage de ces probabilités dans une matrice de contrainte d'assignation.

**15.** Dispositif selon l'une des revendications 12 à 14, dans lequel dans chaque maille, le système de calcul comporte des moyens de mémorisation de trois coefficients constitués par un coefficient de :

   - probabilité d'assignation,
   - probabilité de service,
   - pondération de sursol, et des moyens de combiner ces coefficients au niveau de chaque maille pour affecter d'un poids chacune des trois cellules meilleurs serveurs et rendre compte de la probabilité qu'a chacune d'entre elles d'être la cellule serveuse.

**16.** Dispositif selon l'une des revendications 12 à 14, dans lequel le système calcule, à l'aide des trois probabilités des trois meilleurs serveurs extraites des matrices calculées, et d'une relation qui lie ces probabilités aux probabilités pij de transition d'une cellule cell_i vers une autre cellule cell_j en tenant compte de la marge d'hystérésis du "handover" Hom, une seule valeur Proba_init qui permet ainsi de constituer de proche en proche et déterminer une matrice de probabilité initiale.

**17.** Dispositif selon l'une des revendications 12 à 16, dans lequel les valeurs de probabilité d'assignation sont mémorisées dans le fichier "Proba_assig.txt".

**18.** Dispositif selon l'une des revendications 12 à 17, dans lequel, le coefficient de sursol est fourni par un fichier « Poids.txt » qui se présente sous la forme d'une matrice faisant intervenir la classe de sursol et le type d'axe de circulation auxquels appartient la maille.

**19.** Dispositif selon l'une des revendications 12 à 17, dans lequel, le système de calcul comporte des moyens interactifs permettant la prise en compte des constats de brouillage et des voisinages en ajoutant leur influence (en brouillage cocanal et canal adjacent) aux résultats obtenus des calculs précédents, cette influence étant mémorisée sous la forme d'un taux fourni par un fichier «Fréquences.txt» enregistré en mémoire.

## Claims

**1.** Method of creation of constraint matrices for use in the planning of a cellular wireless telephone network wherein, when there is a defined number of predetermined carrier frequency values ($f_i$, $f_j$) to be allocated to a plurality of radio base stations (11 - 14) having defined positions and transmission powers within a service zone which are provided in order to manage a corresponding plurality of radio cells (1 - 4) which act as server or interfering cells, comprising the following steps:

- according to the positions of each grid square (P) of a server cell, the computing system to work out a prediction representing the value C of the field received in this grid square of the service zone at one ($f_i$) of the predetermined frequencies of the server cell,
- in each of these grid squares, the computing system calculates the value I of the interference field created by each of the other cells which the system considers to be an interfering cell with respect to the cell considered by the computing system to be the server cell,
- in each of these grid squares, the computing system calculates the value of the ratio C/I for the "server" cell, where I represents the interference field created by each of the other interfering cells of the service zone and wherein the value of the interference field I received in the grid square is higher than a predetermined "MINI_INTERFERENCE_FIELD" value memorised at the outset by the computing system,
- by an operation of integration over the entire service zone, the computing system determines the global interference rate $tb_{ij}$ of the server cell by the interfering cells, these values can then be displayed or stored in a so-called initial constraints matrix by representing or storing levels (Ki, Li, Mi) at the intersections of the rows designating server cells and the columns designating interfering cells,
- based on this so-called "initial" constraints matrix, the system determines probabilities of service on initialisation which represent the probability that a given cell will be the server cell supplying the highest field strength to the mobile telephone, the probability of service being deduced from the disparity between the predicted value of the field strength and the modifiable value of a field "MINI_FIELD" stored in a file "Frequencies.txt".

**2.** Method as claimed in Claim 1, wherein a first matrix or table is determined by assuming that each server cell and each of the interfering cells is in co-channel mode.

**3.** Method as claimed in either Claim 1 or Claim 2, wherein the said modifiable field value MINI_FIELD corresponds to a probability of service of 50%, and

- the computing system selects the three cells which constitute the best servers by comparison of the values of the matrix,
- then determines allocation probabilities by computation and stores these probabilities in an allocation constraints matrix.

**4.** Method as claimed in any one of Claims 1 to 3, wherein in each grid square the computing system applies to each of these potential server cells a weighting coefficient which includes three components:

- probability of allocation,
- probability of service,
- probability of above-ground structure,

these three coefficients being combined at each grid square to assign a weighting to each of the three best server cells and to report the probability that each of them has of being the server cell.

5. Method as claimed in any one of Claims 1 to 4, wherein the computing system calculates, with the aid of the three probabilities of the three best servers and a relation which links them to the probabilities $p_{ij}$ of transition from one cell_i to another cell_j taking into account the hysteresis margin of the handover Hom, a single value Proba_init which thus enables step by step determination of an initial probability matrix.

6. Method as claimed in any one of Claims 1 to 5, wherein the probability of allocation reports the probable distribution of the time allocated to each of the three potential server cells over the duration of a communication, this probability is calculated on the basis of the predicted difference in field strength between the potential server cells and takes account of a mean value for the switching margin "HO_MARGIN" actually equal to 5 dB.

7. Method as claimed in any one of Claims 1 to 6, wherein the probability values are stored in the file "Proba_alloc.txt".

8. Method as claimed in Claims 1 to 7, wherein the above-ground structure coefficient (or morphological coefficient) makes it possible to representing the natural handover flows which follow the morphology of the terrain, the cells having the same above-ground structure as the current server cell being favoured, this coefficient being supplied by a file "Weight.text" presented in the form of a matrix which introduces the type of above-ground structure and the type of traffic route to which the grid square belongs.

9. Method wherein the computing system carries out the same calculations as set out in any one of Claims 1, 3 and 4 for the cells using frequencies of a channel adjacent to the frequency channel of the server cell.

10. Method as claimed in any one of Claims 1 to 9, wherein the computing system also takes into account the interference logs and the adjacent areas are taken into account by adding their effects (co-channel and adjacent channel interference) to the results obtained on the basis of the coverage, these effects being given in the form of a proportion supplied by the file "Frequencies.txt" stored in memory.

11. Method as claimed in any one of Claims 1 to 10, wherein since the computing system uses tables of statistical fluctuations of radio propagation conditions acting on the levels of reception of the transmissions from the stations (12 - 14) to determine corresponding probabilities in order that one received signal has the highest level of all over a defined time period.

12. Apparatus for creation of constraints matrices in order to use them in a system enabling the planning of a cellular wireless telephone network, wherein a computer system has means for allocating a defined number of predetermined carrier frequency values ($f_i, f_j$) to a plurality of radio base stations (11 - 14) having defined positions and transmission powers within a service zone which are stored in a database and provided in order to manage a corresponding plurality of radio cells (1 - 4) which act as server or interfering cells, including means for working out, according to the positions of each grid square (P) of a server cell, a prediction representing the value C of the field received in this grid square of the service zone at one ($f_i$) of the predetermined frequencies of the server cell,

- means for calculating for each of these grid squares the value I of the interference field created by each of the other cells which the system considers to be an interfering cell with respect to the cell considered by the computing system to be the server cell, and means for storing these values I,
- means for calculating for each of these grid squares the value of the ratio C/I for the "server" cell, where I represents the interference field created by each of the other interfering cells of the service zone and wherein the value of the interference field I received in the grid square is higher than a predetermined "MINI_ INTERFERENCE_FIELD" value memorised at the outset by the computing system,
- means for effecting an operation of integration over the entire service zone, the computing system determining the global interference rate $tb_{ij}$ of the server cell by the interfering cells, and these values can then be displayed or stored by means provided in a so-called initial constraints matrix by representing or storing levels (Ki, Li, Mi) at the intersections of the rows designating server cells and the columns designating interfering cells,
- means which, based on this so-called "initial" constraints matrix, determine probabilities of service on initialisation which represent the probability that a given cell will be the server cell supplying the highest field strength to the mobile telephone, the probability of service being deduced from the disparity between the predicted value of the field strength and the modifiable value of a field "MINI_FIELD" stored in a file "Frequencies.txt".

13. Apparatus as claimed in Claim 12, **characterised in that** the means are used in order to calculate a first matrix or table determined by assuming that each server cell and each interfering cell is in co-channel mode and then a second matrix assuming that each interfering cell is in adjacent mode relative to the server cell.

14. Apparatus as claimed in either Claim 12 or Claim 13, wherein the said modifiable field value MINI_FIELD corresponds to a probability of service of 50%, the said apparatus comprising:

   - means for selection of the computing system which selects the three cells which constitute the best servers of the values of the matrix,
   - and means for determining allocation probabilities by computation and stores these probabilities in an allocation constraints matrix.

15. Apparatus as claimed in any one of Claims 12 to 14, wherein in each grid square the computing system includes means for storing three coefficients consisting of a coefficient of:

   - probability of allocation
   - probability of service,
   - weighting of above-ground structure, and means combining these coefficients at each grid square to assign a weighting to each of the three best server cells and to report the probability that each of them has of being the server cell.

16. Apparatus as claimed in any one of Claims 12 to 14, wherein the computing system calculates, with the aid of the three probabilities of the three best servers and a relation which links them to the probabilities $p_{ij}$ of transition from one cell_i to another cell_j taking into account the hysteresis margin of the handover Hom, a single value Proba_init which thus enables step by step determination of an initial probability matrix.

17. Apparatus as claimed in any one of Claims 12 to 16, wherein the allocation probability values are stored in the file "Proba_alloc.txt".

18. Apparatus as claimed in any one of Claims 12 to 17, wherein the above-ground structure coefficient is supplied by a file "Weight.text" presented in the form of a matrix which introduces the type of above-ground structure and the type of traffic route to which the grid square belongs.

19. Apparatus as claimed in any of Claims 12 to 17, wherein the computing system includes interactive means which make it possible to take into account the interference logs and the adjacent areas by adding their effects (co-channel and adjacent channel interference) to the results obtained on the basis of the coverage, these effects being memorised in the form of a proportion supplied by the file "Frequencies.txt" stored in memory.

**Patentansprüche**

1. Verfahren zum Erstellen von Beschränkungsmatrizen für deren Nutzung bei der Planung eines zellulären Mobilfunknetzes, das eine bestimmte Anzahl von vorbestimmten Trägerfrequenzwerten ($f_i$, $f_j$) aufweist, die einer Mehrzahl von Funkbasisstationen (11 bis 14) mit bestimmten Positionen und Sendeleistungen in einem Versorgungsbereich zuzuweisen sind, die zum Verwalten einer jeweiligen Mehrzahl von Funkzellen (1 bis 4) vorgesehen sind, die die Rolle einer Versorgungszelle oder einer Störzelle haben, die folgenden Schritte aufweisend:

   - das Rechensystem erstellt gemäß den Positionen jeder Masche (P) einer Versorgungszelle eine repräsentative Vorhersage des Wertes C des empfangenen Feldes in der Masche des Versorgungsbereiches mit der einen ($f_i$) der vorbestimmten Frequenzen der Versorgungszelle,
   - das Rechensystem berechnet in jeder der Maschen den Wert I des Störfeldes, das von jeder der anderen Zellen erzeugt wird, die das System als Störzelle gegenüber der Zelle betrachtet, die von dem Rechensystem

17

als Versorgungszelle angenommen wird,

- das Rechensystem berechnet in jeder der Maschen den Wert des C/I-Verhältnisses für die "Versorgungs"-Zelle, wobei I das Störfeld repräsentiert, das von jeder der anderen Störzellen des Versorgungsbereichs erzeugt wird, und dessen Wert des empfangenen Störfeldes I in der Masche größer als ein vorbestimmter Wert "MINI_STÖR_FELD" ist, der zu Beginn von dem Rechensystem gespeichert wurde,

- das Rechensystem bestimmt mittels einer Integrationsoperation in dem gesamten Versorgungsbereich die Gesamtstörungsrate $tb_{ij}$ der Versorgungszelle durch die Störzellen, wobei die Werte dann in einer als Anfangs-Beschränkungs-Matrix bezeichneten Matrix angezeigt oder gespeichert werden können, wobei an den Schnittpunkten der Zeilen zum Bestimmen der Versorgungszellen und der Spalten zum Bestimmen der Störzellen Pegel (Ki, Li, Mi) dargestellt oder gespeichert werden, und

- das System bestimmt ausgehend von der sogenannten "Anfangs"-Beschränkungsmatrix Versorgungswahrscheinlichkeiten bei der Initialisierung, die die Wahrscheinlichkeit dafür darstellen, dass eine gegebenen Zelle die Versorgungszelle ist, die dem Mobiltelefon das höchste Feld bereitstellt, wobei die versorgungswahrscheinlichkeit von der Abweichung zwischen dem vorhergesagten Wert des Feldes und dem modifizierbaren Wert eines "MINI_FELD"-Feldes, das in einer "Frequenzen.txt"-Datei gespeichert ist, hergeleitet wird.

2. Verfahren gemäß Anspruch 1, wobei eine erste Matrix oder Tabelle unter der Annahme bestimmt wird, dass jede Versorgungszelle und jede Störzelle im gleichen Kanal sind.

3. Verfahren gemäß einem der Ansprüche 1 und 2, wobei der modifizierbare MINI_FELD-Feldwert einer Versorgungswahrscheinlichkeit von 50 % entspricht, und

- wobei das Rechensystem mittels Vergleichens der Werte der Matrix die drei Zellen auswählt, die die besten Server darstellen, und
- anschließend durch Berechnen Zuweisungswahrscheinlichkeiten bestimmt und diese Wahrscheinlichkeiten in einer Zuweisungs-Beschränkungs-Matrix speichert.

4. Verfahren gemäß einem der Ansprüche 1 bis 3, wobei das Rechensystem in jeder Masche auf jede der potenziellen Versorgungszellen einen Gewichtungskoeffizienten anwendet, der drei Komponenten aufweist:

- Zuweisungswahrscheinlichkeit,
- Versorgungswahrscheinlichkeit,
- Gewichtung des Bereichs über dem Boden,

wobei die drei Koeffizienten für jede Masche kombiniert werden, so dass jeder der drei besten Versorgungszellen eine Gewichtigkeit zugeordnet wird und die Wahrscheinlichkeit berücksichtigt wird, die jede der Zellen dahingehend aufweist, dass sie die Versorgungszelle ist.

5. Verfahren gemäß einem der Ansprüche 1 bis 4, wobei das System mit Hilfe der drei Wahrscheinlichkeiten der drei besten Server und mit Hilfe einer Beziehung, die diese mit den Wahrscheinlichkeiten pij des Übergangs von einer Zelle cell_i zu einer anderen Zelle cell_j unter Berücksichtigung der Hysterese-Spanne des "Handover" Hom verknüpft, einen einzigen Wert Proba_init berechnet, der somit das schrittweise Bestimmen einer Anfangs-Wahrscheinlichkeits-Matrix ermöglicht.

6. Verfahren gemäß einem der Ansprüche 1 bis 5, wobei die Zuweisungswahrscheinlichkeit die wahrscheinliche Verteilung der Zeit berücksichtigt, die jeder der drei potenziellen Versorgungszellen über die Dauer einer Kommunikation zugewiesen wird, wobei die Wahrscheinlichkeit auf der Grundlage des vorhergesagten Feldunterschiedes zwischen den potentiellen Versorgungszellen berechnet wird und einen Mittelwert einer Umschaltspanne "HO-MARGIN" berücksichtigt, die gleich 5 dB ist.

7. Verfahren gemäß einem der Ansprüche 1 bis 6, wobei die Wahrscheinlichkeitswerte in der Datei "Proba_assig.txt" gespeichert sind.

8. Verfahren gemäß Anspruch 1 bis 7, wobei der Überboden-Koeffizient (oder morphologischer Koeffizient) das Berücksichtigen der natürlichen "Handover"-Ströme ermöglicht, die der Morphologie des Geländes folgen, wobei die Zellen bevorzugt werden, die denselben Bereich über dem Boden aufweisen wie die aktuelle Versorgungszelle, wobei der Koeffizient von einer Datei "Poids.txt" bereitgestellt wird, die in Form einer Matrix dargestellt ist, die die Kategorie von Bereich über dem Boden und die Art von Verkehrsader einsetzt, zu denen die Masche gehört.

9.  Verfahren, bei dem das Rechensystem dieselben Berechnungen wie in einem der Ansprüche 1, 3 bis 4 für die Zellen durchführt, die Kanalfrequenzen benachbart zu dem Frequenzkanal der Versorgungszelle nutzen.

10. Verfahren gemäß einem der Ansprüche 1 bis 9, wobei das Rechensystem ferner die Störungsprotokolle berücksichtigt, und wobei die Umgebungen berücksichtigt werden, indem ihr Einfluss (bezüglich der Co-Kanal- und Nachbarkanalstörung) zu den Ergebnissen hinzugefügt wird, die ausgehend von der Abdeckung erhalten werden, wobei der Einfluss in Form einer Rate angegeben ist, die von der im Speicher gespeicherten Datei "Frequenzen.txt" bereitgestellt wird.

11. Verfahren gemäß einem der Ansprüche 1 bis 10, wobei das Rechensystem Statistiktabellen über Schwankungen von Funkausbreitungsbedingungen aufweist, die die Empfangspegel der Sendungen von den Stationen (12 bis 14) beeinflussen, und wobei das System entsprechende Wahrscheinlichkeiten bestimmt, damit ein empfangenes Signal über einen bestimmten Zeitraum den höchsten Pegel von allen aufweist.

12. Vorrichtung zum Erzeugen von Beschränkungsmatrizen für deren Nutzung in einem System, das die Planung eines zellulären Mobilfunknetzes ermöglicht, wobei ein Computersystem Mittel aufweist zum Zuweisen einer bestimmten Anzahl von vorbestimmten Trägerfrequenzwerten ($f_i$, $f_j$), die einer Mehrzahl von Funkbasisstationen (11 bis 14) zuzuweisen sind, mit bestimmten Positionen und Sendeleistungen in einem Versorgungsbereich, die in einer Datenbank gespeichert sind, die zum Verwalten einer jeweiligen Mehrzahl von Funkzellen (1 bis 4) vorgesehen sind, die die Rolle einer Versorgungszelle oder einer Störzelle haben, Mittel aufweisend zum Erstellen gemäß den Positionen jeder Masche (P) einer Versorgungszelle einer repräsentativen Vorhersage des Wertes C des empfangenen Feldes in der Masche des Versorgungsbereichs mit der einen ($f_i$) der vorbestimmten Frequenzen der Versorgungszelle,

    - Mittel zum Berechnen für jede der Maschen des Wertes I des Störfeldes, das von jeder der anderen Zellen erzeugt wird, die das System als Störzelle gegenüber der Zelle betrachtet, die von dem Rechensystem als Versorgungszelle angenommen wird, und Mittel zum Speichern der Werte I,
    - Mittel zum Berechnen für jede der Maschen des Wertes eines C/I-Verhältnisses für die "Versorgungs"-Zelle, wobei I das Störfeld repräsentiert, das von jeder der anderen Störzellen des Versorgungsbereichs erzeugt wird, und dessen empfangener Störfeldwert I in der Masche größer als ein vorbestimmter "MINI_STÖR_FELD" -Wert ist, der zu Beginn von dem Rechensystem gespeichert wurde,
    - Mittel zum Durchführen einer Integrationsoperation in dem gesamten Versorgungsbereich, wobei das Rechensystem die Gesamtstörungsrate $tb_{ij}$ der Versorgungszelle durch die Störzellen bestimmt, wobei die Werte dann von Mitteln in einer Matrix angezeigt oder gespeichert werden können, die als Anfangs-Beschränkungs-Matrix bezeichnet wird, wobei an den Schnittpunkten der Zeilen zum Bestimmen der Versorgungszellen und der Spalten zum Bestimmen der Störzellen Pegel ($K_i$, $L_i$, $M_i$) dargestellt oder gespeichert werden, und
    - Mittel zum Bestimmen ausgehend von der sogenannten "Anfangs"-Beschränkungsmatrix der Versorgungswahrscheinlichkeiten bei der Initialisierung, die die Wahrscheinlichkeit dafür darstellen, dass eine gegebenen Zelle die Versorgungszelle ist, die dem Mobiltelefon das höchste Feld bereitstellt, wobei die Versorgungswahrscheinlichkeit von der Abweichung zwischen dem vorhergesagten Wert des Feldes und dem modifizierbaren Wert eines "MINI_FELD"-Feldes, das in einer "Frequenzen.txt"-Datei gespeichert ist, hergeleitet wird.

13. Vorrichtung gemäß Anspruch 12, **dadurch gekennzeichnet, dass** die Mittel zum Berechnen einer bestimmten ersten Matrix oder Tabelle mit der Annahme, dass sich jede Versorgungszelle und jede Störzelle im gleichen Kanal befindet, und anschließend einer zweiten Matrix mit der Annahme, dass jede Störzelle im Nachbarkanal der Versorgungszelle liegt, verwendet werden.

14. Vorrichtung gemäß einem der Ansprüche 12 und 13, wobei der modifizierbare MINI_FELD-Feldwert einer Versorgungswahrscheinlichkeit von 50 % entspricht, wobei die Vorrichtung aufweist:

    - Auswählmittel des Rechensystems, die mittels Vergleichens der Werte der Matrix die drei Zellen auswählen, die die besten Server darstellen,
    - und Mittel zum Bestimmen der Zuweisungswahrscheinlichkeiten durch Berechnen, und zum Speichern der Wahrscheinlichkeiten in deiner Zuweisungsbeschränkungsmatrix.

15. Vorrichtung gemäß einem der Ansprüche 12 bis 14, wobei das Rechensystem in jeder Masche aufweist: Mittel zum Speichern von drei Koeffizienten, die aus einem der folgenden Koeffizienten bestehen:

- Zuweisungswahrscheinlichkeit,
- Versorgungswahrscheinlichkeit,
- Gewichtung des Bereichs über dem Boden,

sowie Mittel zum Kombinieren der Koeffizienten für jede Masche zum Zuordnen einer Gewichtigkeit zu jeder der drei besten Versorgungszellen und zum Berücksichtigen der Wahrscheinlichkeit, die für jede von ihnen dahingehend besteht, dass sie die Versorgungszelle ist.

16. Vorrichtung gemäß einem der Ansprüche 12 bis 14, wobei das System mit Hilfe der drei Wahrscheinlichkeiten der drei besten Server, die aus den berechneten Matrizen extrahiert werden, und mit Hilfe einer Beziehung, die die Wahrscheinlichkeiten mit den Wahrscheinlichkeiten pij des Übergangs von einer Zelle cell_i zu einer anderen Zelle cell_j unter Berücksichtigung der Hysterese-Spanne des "Handover" Hom verknüpft, einen einzigen Wert Proba_ init berechnet, der somit das schrittweise Bilden und das Bestimmen einer Anfangs-Wahrscheinlichkeits-Matrix ermöglicht.

17. Vorrichtung gemäß einem der Ansprüche 12 bis 16, wobei die Zuweisungs-Wahrscheinlichkeits-Werte in der Datei "Proba_assig.txt" gespeichert werden.

18. Vorrichtung gemäß einem der Ansprüche 12 bis 17, wobei der Überboden-Koeffizient von einer Datei "Poids.txt" bereitstellt wird, die in Form einer Matrix dargestellt ist, die die Kategorie des Bereichs über dem Boden und die Art von Verkehrsachse, zu denen die Masche gehört, einsetzt.

19. Vorrichtung gemäß einem der Ansprüche 12 bis 17, wobei das Rechensystem interaktive Mittel aufweist, die das Berücksichtigen der Störungsprotokolle und der Umgebungen ermöglichen, wobei ihr Einfluss (in Bezug auf Co-Kanal- und Nachbarkanal-Störungen) zu den aus den vorangehenden Berechnungen erhaltenen Ergebnissen hinzugefügt werden, wobei der Einfluss in Form einer Rate gespeichert wird, die von einer in einem Speicher gespeicherten Datei "Frequenzen.txt" bereitgestellt wird.

FIGURE 1

50i

| | Cell-1 | Cell-2......Cell-i..............Cell-n | |
|---|---|---|---|
| Cell-1 | | Ki 10 % | Li 4 % | Mi 8 % |
| Cell-2 | | | Xi | Yi |
| Cell-j | | | tb$_{ij}$ | Zi |
| Cell-n | | | | |

FIGURE 2.1

50j

| | Kj 9 % | Lj 8 % | Mj 7 % |
|---|---|---|---|
| | | Xj | Yj |
| | | | Zj |
| | | | |

FIGURE 2.2

Figure 3.1

figure 3.2 : diagramme à états pour le calcul des probabilités d'assignation

Figure 3.3 : probabilités d'assignation entre 3 serveuses

**Probabilité d'assignation**
**avec C1-C2 = 0**

CO-C2 (dB)

Figure 4.1

**Probabilité de service**

CO - Champs_mini

Figure 4.2

| Classe -> | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Pas d'axe | 0 | 1 | 1 | 1 | 1 | 5 | 5 | 5 | 8 | 8 | 10 | 10 | 10 | 10 | 10 | 10 |
| Autoroutes | 0 | 10 | 10 | 10 | 10 | 20 | 20 | 20 | 20 | 20 | 20 | 25 | 25 | 25 | 25 | 25 |
| Nationales | 0 | 4 | 4 | 4 | 4 | 10 | 10 | 10 | 16 | 16 | 16 | 16 | 20 | 20 | 20 | 20 |
| Voies ferrées | 0 | 4 | 4 | 4 | 4 | 8 | 8 | 10 | 15 | 15 | 15 | 15 | 20 | 20 | 20 | 20 |
| Departementales | 0 | 3 | 3 | 3 | 3 | 8 | 8 | 10 | 15 | 15 | 15 | 15 | 18 | 18 | 18 | 18 |
| Routes locales | 0 | 2 | 2 | 2 | 2 | 8 | 8 | 10 | 15 | 15 | 15 | 15 | 18 | 18 | 18 | 18 |
| Rues principales | 0 | 1 | 1 | 1 | 1 | 5 | 5 | 5 | 8 | 8 | 10 | 12 | 15 | 15 | 15 | 15 |
| Rues secondaires | 0 | 1 | 1 | 1 | 1 | 5 | 5 | 5 | 8 | 8 | 10 | 12 | 15 | 15 | 15 | 15 |

Figure 4.3

**EP 1 283 646 B1**

## RÉFÉRENCES CITÉES DANS LA DESCRIPTION

**Documents brevets cités dans la description**

- US 5768687 A